# EUROPEAN PATENT SPECIFICATION

(11) **EP 3 742 414 B1**
(45) Date of publication and mention of the grant of the patent: **27.09.2023**
(21) Application number: 18900073.0
(22) Date of filing: 21.12.2018
(51) Int. Cl.: G08B 25/00, H04Q 9/00, H04W 72/04, G08B 17/00, G08B 25/10

(54) **DETECTED INFORMATION COMMUNICATING DEVICE, DETECTED INFORMATION COMMUNICATING SYSTEM, COMMUNICATION SYSTEM, RADIO COMMUNICATION METHOD, AND PROGRAM**
VORRICHTUNG ZUR KOMMUNIKATION VON ERKANNTER INFORMATION, SYSTEM ZUR KOMMUNIKATION VON ERKANNTER INFORMATION, KOMMUNIKATIONSSYSTEM, FUNKKOMMUNIKATIONSVERFAHREN UND PROGRAMM
DISPOSITIF DE COMMUNICATION D'INFORMATIONS DÉTECTÉES, SYSTÈME DE COMMUNICATION D'INFORMATIONS DÉTECTÉES, SYSTÈME DE COMMUNICATION, PROCÉDÉ DE RADIOCOMMUNICATION ET PROGRAMME

(30) Priority: 15.01.2018 JP 2018004388
(43) Date of publication of application: 25.11.2020
(73) Proprietor: Panasonic Intellectual Property Management Co., Ltd., Osaka-shi, Osaka 540-6207 (JP)
(72) Inventor: UEDA, Shinsuke, Osaka-shi, Osaka 540-6207 (JP); KOZAKI, Takahiro, Osaka-shi, Osaka 540-6207 (JP); KASAI, Hideki, Osaka-shi, Osaka 540-6207 (JP)
(74) Representative: Appelt, Christian W.
(86) International application number: PCT/JP2018/047145
(87) International publication number: WO 2019/138844

(56) References cited:
- EP-A1- 2 672 774
- EP-A1- 2 830 279
- WO-A1-2012/114738
- JP-A- 2002 158 667
- JP-A- 2004 320 446
- JP-A- 2005 150 883
- JP-A- 2016 536 934
- US-A1- 2003 151 513
- US-A1- 2014 118 143

## Description

### TECHNICAL FIELD

The present invention relates to a detected information communication device, a detected information communication system, a communication system, a wireless communication method, and a program.

### BACKGROUND ART

JP 2008-165513 A describes a detected information communication system that includes a plurality of wireless stations each of which is provided with a detection unit. This system that can operate the plurality of wireless stations together by performing, among the plurality of wireless stations each of which is provided in a room, wireless communication regarding detected information indicating a result detected by a detection unit. This makes it possible to notify a person present in a room of an anomaly, such as fire, even if the person is in the room different from a room where the anomaly has occurred when the plurality of wireless stations are, for example, fire alarms each of which includes, as a detection unit, a sensor that detects heat or smoke.

US 2003/151513 A1 discloses a wireless network including a cluster network and a sensor/actuator network arranged in a hierarchical manner with the cluster head network. The cluster head network includes at least one cluster head and the sensor/actuator network includes a plurality of sensor/actuator nodes arranged in a plurality of node levels.

US 2014/118143 A1 discloses a system that provides personal alert and tracking capabilities using one or more nodes. Each node includes radio transceiver chips operating at different frequency ranges, a power amplifier, sensors, a display, and embedded software. The chips enable the node to operate as either a mobile sensor node or a relay base station node while providing a long distance relay link between nodes. The power amplifier enables a line-of-sight communication between the one or more nodes. The sensors provide a GPS signal, temperature, and accelerometer information (used to trigger an alert condition). The embedded software captures and processes the sensor information, provides a multi-hop packet routing protocol to relay the sensor information to and receive alert information from a command center, and to display the alert information on the display.

### SUMMARY OF THE INVENTION

### TECHNICAL PROBLEM

Recent years have seen a demand for notifying (transferring) other devices (personal computers (PCs), mobile terminals, monitors, etc.) of detected information used in the aforementioned detected information communication system through other wireless stations (e.g. gateway devices etc.). That is to say, there is a demand for extending the range of notifying other systems of the detected information, not just keeping the detected information within a closed system like the detected information communication system. In this case, a wireless-communication standard that is applied to the other wireless stations may be different from a wireless-communication standard applied to the aforementioned detected information communication system. If this is the case, it is difficult to apply the communication method employed in the detected information communication system to communicate with the other wireless stations. In order to address this issue, a conversion device etc. for converting a communication method may be provided as a method for performing both communication within the detected information communication system and communication with the other wireless stations. However, the aforementioned method tends to be expensive and enlarge the system. As such, it is difficult to perform both communication within the detected information communication system and communication with the other wireless stations.

The present invention aims to provide a detected information communication device etc. which can readily perform both communication within a detected information communication system and communication with another wireless station.

### SOLUTIONS TO PROBLEM

The invention is defined by the independent claims and provides a solution to the above described aims by the subject matter which is subject to the appended independent claims. Advantageous embodiments of the invention are subject to the dependent claims.

A detected information communication device etc. according to an aspect of the present invention can readily perform both communication within a detected information communication system and communication with another wireless station.

### BRIEF DESCRIPTION OF DRAWINGS

FIG. 1 is a diagram illustrating an example of a configuration of a communication system according to an embodiment.
FIG. 2 is a diagram illustrating an example of a configuration of a detected information communication device according to the embodiment.
FIG. 3 is a flowchart illustrating an example of operation of the detected information communication device according to the embodiment.
FIG. 4 is a diagram illustrating an example of allotment of time slots for performing communication in the communication system according to the embodiment.
FIG. 5 is a diagram illustrating another example of allotment of time slots for performing communication in the communication system according to the embodiment.

### DESCRIPTION OF EXEMPLARY EMBODIMENTS

Hereinafter, embodiments will be described with reference to the drawings. Note that the embodiments described below each show a specific example of the present invention. The numerical values, shapes, structural elements, the arrangement and connection of the structural elements, steps (processes), the processing order of the steps, and the like described in the following embodiments are mere examples, and thus are not intended to limit the present invention. In addition, among the structural elements in the following embodiments, structural elements not recited in any of the independent claims are described as optional structural elements. Note that the drawings are schematic diagrams, and do not necessarily provide strictly accurate illustration.

### EMBODIMENT

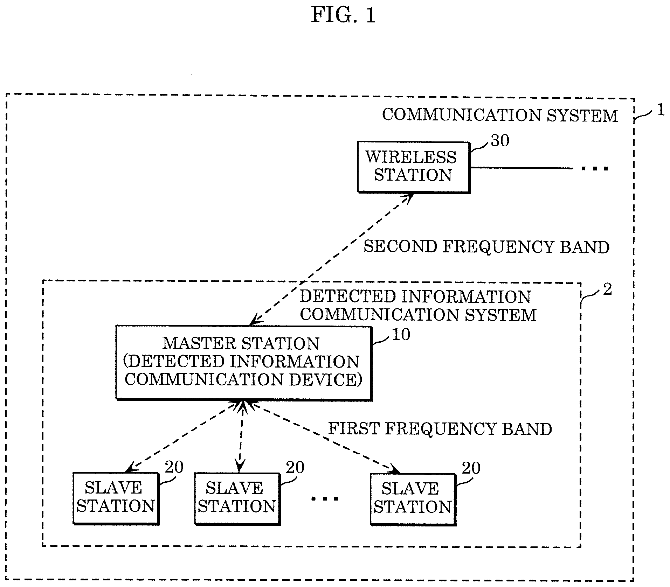

Hereinafter, embodiments will be described with reference to FIG. 1 through FIG. 5.

FIG. 1 is a diagram illustrating an example of a configuration of communication system 1 according to an embodiment.

Communication system 1 includes detected information communication system 2 and wireless station 30. Although not illustrated, a device, such as a personal computer (PC), a mobile terminal, a monitor, and a distribution board, is connected to wireless station 30. In communication system 1, communication is performed, including such a device, regarding various types of information through wireless station 30.

Detected information communication system 2 is a system which includes a plurality of wireless stations each of which includes a detection unit. As illustrated in FIG. 1, detected information communication system 2 includes, as the plurality of wireless stations, slave stations 20 and detected information communication device 10 that operates as a master station to slave stations 20. Note that operating as a master station to slave stations 20 means that the master station takes charge of controlling slave stations 20, for example. In the embodiment, the master station broadcasts a beacon signal to slave stations 20, and slave stations 20 operate according to the beacon signal received. In such a way, detected information communication device 10 operates as the master station to slave stations 20. Detected information communication device 10 includes a detection unit which is also called a first detection unit. Slave stations 20 each include a detection unit which is also called a second detection unit. Here, detected information communication system 2 includes a plurality of slave stations 20, but detected information communication system 2 may include at least one slave station 20. Detected information communication system 2 is, for example, a fire alarm system for a residence. In this case, detected information communication device 10 and slave stations 20 each are a fire alarm for the residence which serves as a sensor that detects heat, smoke, etc. Note that detected information communication system 2 may be, for example, a security system for a residence. In this case, the detection units each serve as a sensor that detects, for example, the breaking of window glasses, or the opening and closing of windows or doors.

Detected information communication device 10 and slave stations 20 wirelessly communicate with one another using a first frequency band. Detected information communication system 2 has, for example, a star-shaped network topology in which detected information communication device 10 serves as the center of the network. With this, when any of the detection units each of which is included in detected information communication device 10 and slave stations 20 detects an anomaly, detected information indicating the anomaly is shared among detected information communication device 10 and slave stations 20, and thus detected information communication device 10 and slave stations 20 can operate together. This makes it possible to notify, for example, a person present in a room of an anomaly, such as fire, even if the person is in the room different from a room where the anomaly has occurred. Note that the aforementioned network topology is not limited to the star-shaped network topology. Therefore, communication among slave stations 20 need not be performed through detected information communication device 10. Slave stations 20 may directly communicate with one another.

As described above, detected information communication system 2 is used for security purposes, such as fire alarms and crime prevention purposes. For this reason, the first frequency band needs to be a band for security purposes which is affected by fewer interference waves and enables highly reliable communication. For example, in Japan, the first frequency band is a frequency band ranging from at least 426.25 MHz to at most 426.8375 MHz which is used for wireless stations in a low power security system. In other words, when detected information communication device 10 and slave stations 20 are wireless stations in the low power security system, it is necessary to use wireless communication using, as the first frequency band, the frequency band ranging from at least 426.25 MHz to at most 426.8375 MH.

Wireless station 30 is another wireless station different from the wireless stations (detected information communication device 10 and slave stations 20) in detected information communication system 2. Wireless station 30 is, for example, a gateway device, and wirelessly communicates with detected information communication device 10 using a second frequency band. Note that, as described above, a device, such as a PC, a mobile terminal, a monitor, and a distribution board, is connected to wireless station 30. Wireless station 30 communicates with such a device in a wired manner (e.g. communication performed using RS-485 etc.) or in a wireless manner (e.g. communication performed using a wireless local area network (LAN) etc.). For example, wireless station 30 receives detected information detected in detected information communication system 2, and notify (transfer) the device connected to wireless station 30 of the detected information received. For example, when wireless station 30 receives detected information indicating fire, wireless station 30 can notify a mobile terminal connected to wireless station 30 of the detected information, and can notify a user who is, for example, not at home of the fire. The second frequency band is a band different from the first frequency band. The second frequency band is a general-purpose band, and is, for example, a 920 MHz band.

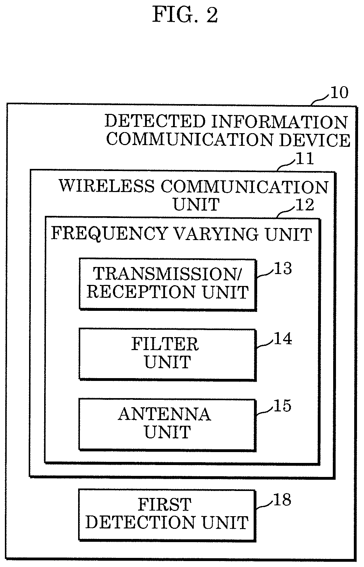

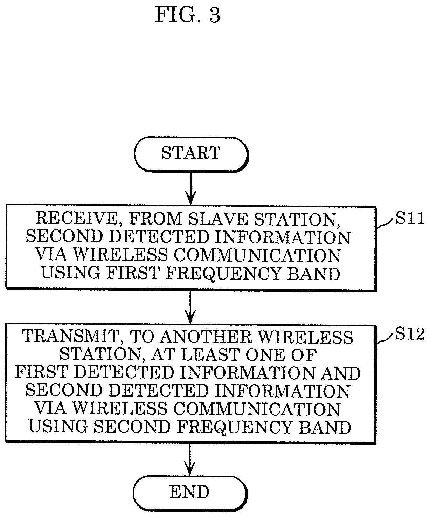

Next, detected information communication device 10 will be described in detail with reference to FIG. 2 and FIG. 3.

FIG. 2 is a diagram illustrating an example of a configuration of detected information communication device 10 according to the embodiment. FIG. 3 is a flowchart illustrating an example of operation of detected information communication device 10 according to the embodiment.

Detected information communication device 10 includes wireless communication unit 11 that wirelessly communicates with slave stations 20 and another wireless station 30 (another wireless station 30, which will be called wireless station 30 from now on, means a wireless station different from slave stations 20), and first detection unit 18.

As described above, first detection unit 18 is a sensor used in a fire alarm which detects, for example, heat or smoke, or a sensor etc. used for security purposes which detects the breaking of window glasses or the opening and closing of windows or doors. Detected information indicating a detection result obtained by first detection unit 18 is transmitted to slave stations 20 or wireless station 30 through wireless communication unit 11.

As illustrated in FIG. 3, wireless communication unit 11 receives, from each slave station 20, detected information (also called second detected information) indicating a detection result obtained by the second detection unit included in each slave station 20 via wireless communication using the first frequency band (step S11). In addition, wireless communication unit 11 transmits, to slave stations 20, detected information (also called first detected information) indicating a detection result obtained by first detection unit 18 via wireless communication using the first frequency band. Furthermore, wireless communication unit 11 relays second detected information received from one slave station 20 to the other slave stations 20. For example, such wireless communication using the first frequency band is regularly performed at predetermined time intervals.

In addition, wireless communication unit 11 transmits, to wireless station 30, at least one of the first detected information and detected information detected by a second detection unit via wireless communication using the second frequency band different from the first frequency band (step S12). Note that the wireless communication is performed, for example, when detected information indicates an anomaly. Specifically, when the first detected information indicates an anomaly, the first detected information is transmitted to wireless station 30 via wireless communication using the second frequency band. When second detected information indicates an anomaly, the second detected information is transmitted to wireless station 30 via wireless communication using the second frequency band. Note that even when the first detected information does not indicate an anomaly, wireless communication unit 11 may transmit information other than detected information to wireless station 30 in order to notify a user of device failures, low battery, etc.

Detected information communication device 10 is a computer including a processor (microprocessor), a memory, a communication interface (such as wireless communication unit 11), etc. The memory is ROM, RAM, etc., and can store a control program (computer program) executed by the processor. For example, the processor operates according to the control program (computer program) to control operation of wireless communication unit 11 and first detection unit 18.

Although a wireless communication standard applied to wireless station 30 and a wireless communication standard applied to detected information communication system 2 are different, one wireless communication unit 11 can perform both communication within detected information communication system 2 and communication with wireless station 30. This is possible because wireless communication unit 11 includes frequency varying unit 12 that makes a frequency used for wireless communication variable.

Frequency varying unit 12 includes transmission/reception unit 13, filter unit 14, and antenna unit 15.

Transmission/reception unit 13 is, for example, a radio frequency (RF) signal processing circuit (radio frequency integrated circuit (RFIC)). Transmission/reception unit 13 processes a received signal which is inputted from antenna unit 15 through filter unit 14, and outputs a transmission signal to antenna unit 15 through filter unit 14. Transmission/reception unit 13 has a function of making a frequency of a signal to be transmitted or a signal to be received variable. That is to say, transmission/reception unit 13 can switch between a transmission signal of the first frequency band and a transmission signal of the second frequency band for outputting either the transmission signal of the first frequency band or the transmission signal of the second frequency band. Transmission/reception unit 13 can also switch between a signal of the first frequency band and a signal of the second frequency band for receiving either the signal of the first frequency band or the signal of the second frequency band.

Filter unit 14 is a filter which can vary a frequency used for wireless communication by making a frequency of a signal that can pass the filter variable. Filter unit 14 includes, for example, a filter including an impedance variable element, such as a varicap diode. By adjusting an impedance value of the impedance variable element, the frequency band of the signal that can pass the filter can be varied and includes at least the first frequency band and the second frequency band. Antenna unit 15 is an antenna that makes a frequency used for wireless communication variable by varying a frequency of a transmittable or receivable signal. Antenna unit 15 includes, for example, an antenna including an impedance variable element, such as a varicap diode. By adjusting an impedance value of the impedance variable element, the frequency band of the transmittable or receivable signal can be varied and includes at least the first frequency band and the second frequency band. Note that antenna unit 15 has a mechanism for varying the length of the antenna and a mechanism for varying the position of a feed point. The frequency band of the transmittable or receivable signal may include at least the first frequency band and the second frequency band by adjusting the length of the antenna using the mechanisms.

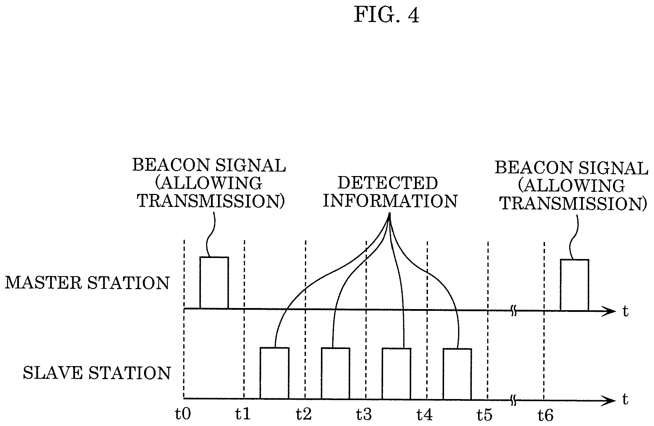

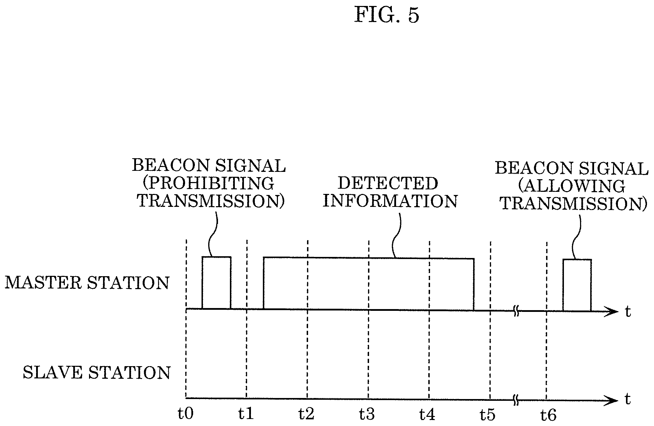

Next, time slots for performing communication in communication system 1 will be described with reference to FIG. 4 and FIG. 5.

FIG. 4 is a diagram illustrating an example of allotment of time slots for performing communication in communication system 1 according to the embodiment. Specifically, FIG. 4 illustrates the allotment of time slots for performing communication in communication system 1 in the case in which neither first detected information nor second detected information indicates an anomaly. In addition, as an example, four slave stations 20 are provided for detected information communication device 10 (master station) in FIG. 4.

When detected information communication device 10 receives second detected information from a plurality of slave stations 20, it is necessary for detected information communication device 10 not to simultaneously receive second detected information from each of the plurality of slave stations 20. This is because simultaneously transmitting second detected information from each of the plurality of slave stations 20 causes interference.

Accordingly, as illustrated in FIG. 4, wireless communication unit 11 included in detected information communication device 10 (master station) transmits a beacon signal at predetermined time intervals. Specifically, the predetermined time intervals are intervals from t0 to t6 illustrated in FIG. 4. Although details will be described later, note that the beacon signal in this description includes a command which allows slave station 20 to transmit detected information detected by the second detection unit. Furthermore, slave station 20 receives the beacon signal, and transmits, using a transmission timing of the beacon signal as a reference, detected information detected by the second detection unit to detected information communication device 10. Accordingly, wireless communication unit 11 receives, from slave station 20, the detected information detected by the second detection unit, using the transmission timing of the beacon signal as a reference.

Specifically, when four slave stations 20 are provided, each slave station 20 is allotted a time slot among time slots between t1 and t2, between t2 and t3, between t3 and t4, and between t4 and t5 which are different from one another as illustrated in FIG. 4. The time slots are provided using the transmission timing of a beacon signal transmitted from detected information communication device 10 as a reference. As such, by providing time slots using the transmission timing of a specific signal (here, a beacon signal) as a reference, each slave station 20 is allotted a time slot among the time slots different from one another. This can prevent slave stations 20 from causing interference since each slave station 20 transmits second detected information during a time slot allotted. Note that when slave station 20 has no detected information to be transmitted, slave station 20 transmits nothing even when a time slot allotted has come.

In addition, since wireless communication unit 11 includes frequency varying unit 12, wireless communication unit 11 can perform both wireless communication using the first frequency band and wireless communication using the second frequency band. However, due to the configuration of transmission/reception unit 13, wireless communication unit 11 performs wireless communication using each of the frequency bands per unit of time. Accordingly, wireless communication unit 11 cannot simultaneously perform wireless communication using the first frequency band and wireless communication using the second frequency band. For this reason, it is necessary not to simultaneously perform wireless communication using the first frequency band and wireless communication using the second frequency band.

In order to address this issue, it can be considered whether to separately provide time slots for performing communication between detected information communication device 10 and slave stations 20 and time slots for performing communication between detected information communication device 10 and wireless station 30, with regard to the time slots for performing communication in communication system 1. However, since communication between detected information communication device 10 and wireless station 30 is performed when, for example, fire occurs, such communication is less frequently performed. Thus, the time slots provided for performing communication between detected information communication device 10 and wireless station 30 are likely to be useless. Although such communication is less frequently performed, a method for not simultaneously performing wireless communication using the first frequency band and wireless communication using the second frequency band will be described with reference to FIG. 5.

FIG. 5 is a diagram illustrating another example of allotment of time slots for performing communication in communication system 1 according to the embodiment. Specifically, FIG. 5 illustrates the allotment of time slots for performing communication in communication system 1 in the case in which either first detected information or second detected information indicates an anomaly.

As illustrated in FIG. 5, wireless communication unit 11 included in detected information communication device 10 (master station) transmits a beacon signal at predetermined time intervals. In FIG. 4, it is described that a beacon signal includes a command which allows slave station 20 to transmit detected information detected by the second detection unit when the detected information does not indicate an anomaly. However, when the detected information indicates an anomaly, the detected information needs to be transmitted to wireless station 30 via wireless communication using the second frequency band. In this case, a beacon signal includes a command which prohibits slave station 20 from transmitting detected information detected by the second detection unit. As such, a beacon signal includes a command which either allows slave station 20 to transmit detected information detected by the second detection unit or prohibits slave station 20 from transmitting detected information detected by the second detection unit.

Slave station 20 receives a beacon signal, but slave station 20 does not transmit second detected information to detected information communication device 10 since the beacon signal includes a command which prohibits slave station 20 from transmitting the second detected information. This enables wireless communication unit 11 not to simultaneously perform wireless communication using the first frequency band and wireless communication using the second frequency band. Specifically, the second detected information is not transmitted from any slave station 20 between t1 and t5. Between t1 and t5, at least one of first detected information and second detected information can be transmitted to wireless station 30.

Note that detected information indicating an anomaly which is transmitted to wireless station 30 is detected information obtained by detected information communication device 10 between t0 and t1, before a beacon signal is transmitted. That is to say, since detected information communication device 10 has obtained the detected information indicating an anomaly between t0 and t1, before the beacon signal is transmitted, wireless communication unit 11 transmits, between t0 to t1, a beacon signal including the command which prohibits slave station 20 from transmitting detected information. In addition, after wireless communication unit 11 has transmitted the detected information indicating an anomaly to wireless station 30, a beacon signal which is transmitted from t6 onward, as illustrated in FIG. 5, includes the command which allows slave station 20 to transmit second detected information in order for detected information communication device 10 to receive the latest second detected information from slave station 20.

As has been described above, detected information communication device 10 that operates as a master station to slave station 20. Detected information communication device 10 includes: wireless communication unit 11 that wirelessly communicate with slave station 20 and wireless station 30; and first detection unit 18. Wireless communication unit 11 receives, from slave station 20, detected information detected by a second detection unit included in slave station 20 via wireless communication using the first frequency band, and transmits, to wireless station 30, at least one of detected information detected by first detection unit 18 and the detected information detected by the second detection unit via wireless communication using the second frequency band different from the first frequency band.

Accordingly, each of wireless communication performed using the first frequency band and wireless communication performed using the second frequency band can use a wireless communication standard having a communication range, communication reliability, etc. suitable for each of the wireless communication performed using the first frequency band and the wireless communication performed using the second frequency band. Furthermore, it is possible to perform both communication within detected information communication system 2 and communication with wireless station 30. Since it is not necessary to provide a conversion device etc. for converting a communication method, in addition to the wireless stations included in detected information communication system 2, it is possible to readily perform both communication within detected information communication system 2 and communication with wireless station 30.

In addition, wireless communication unit 11 includes frequency varying unit 12 that makes a frequency used for wireless communication variable. The frequency made variable by frequency varying unit 12 has a variable width that includes at least the first frequency band and the second frequency band.

For example, frequency varying unit 12 includes filter unit 14 that makes the frequency used for wireless communication variable by making a frequency of a passable signal variable. The frequency made variable by filter unit 14 has a variable width that includes at least the first frequency band and the second frequency band.

Accordingly, wireless communication performed using the first frequency band and wireless communication performed using the second frequency band can share filter unit 14. Thus, it is possible to seek reduction in the size and cost of detected information communication device 10.

In addition, frequency varying unit 12 includes antenna unit 15 that makes the frequency used for wireless communication variable by making a frequency of a transmittable or receivable signal variable. The frequency made variable by antenna unit 15 has a variable width that includes at least the first frequency band and the second frequency band.

Accordingly, wireless communication performed using the first frequency band and wireless communication performed using the second frequency band can share antenna unit 15. Thus, it is possible to seek reduction in the size and cost of detected information communication device 10.

In addition, wireless communication unit 11 transmits a beacon signal at predetermined time intervals via wireless communication using the first frequency band, and receives, from slave station 20, the detected information detected by the second detection unit, using a transmission timing of the beacon signal as a reference.

Accordingly, when detected information communication system 2 includes a plurality of slave stations 20, each of the plurality of slave stations 20 is allotted a time slot among time slots different from one another, using a transmission timing of a beacon signal as a reference. Thus, it is possible to prevent the plurality of slave stations 20 from causing interference as a result of all slave stations 20 simultaneously transmitting second detected information to detected information communication device 10.

In addition, the beacon signal includes a command which allows slave station 20 to transmit the detected information detected by the second detection unit or prohibits slave station 20 from transmitting the detected information detected by the second detection unit.

Accordingly, when wireless communication using the second frequency band is performed, wireless communication using the first frequency band is prohibited from being performed. Thus, wireless communication using the first frequency band and wireless communication using the second frequency band are prevented from being simultaneously performed. Furthermore, when an anomaly occurs, time slots which are normally allotted to wireless communication performed using the first frequency band can be allotted to wireless communication performed using the second frequency band. Thus, it is unnecessary to separately provide time slots for the wireless communication performed using the second frequency band. As a consequence, many time slots can be provided for slave station 20, thereby increasing the number of slave stations 20 which can be associated with detected information communication device 10.

In addition, detected information communication system 2 according to the embodiment includes: detected information communication device 10; and slave station 20.

Accordingly, it is possible to provide a detected information communication system which can readily perform both communication within detected information communication system 2 and communication with wireless station 30.

In addition, communication system 1 according to the embodiment includes: detected information communication system 2; and wireless station 30.

Accordingly, it is possible to provide a detected information communication system which can readily perform both communication within detected information communication system 2 and communication with wireless station 30.

### OTHER EMBODIMENT

The above has described detected information communication device 10, detected information communication system 2, and communication system 1 according to the embodiment, yet the present invention is not limited to the above embodiment.

Filter unit 14 is described as including, for example, a filter that includes an impedance variable element, such as a varicap diode, in the above embodiment, but the filter is not limited to the above. Filter unit 14 may include, for example, a first filter having the first frequency band as a pass band, a second filter having the second frequency band as a pass band, and a switch for switching between the first filter and the second filter to be used for performing communication.

Antenna unit 15 is described as including, for example, an antenna that includes an impedance variable element, such as a varicap diode, in the above embodiments, but the antenna is not limited to the above. Antenna unit 15 may include, for example, a first antenna that can receive or transmit a signal of the first frequency band, a second antenna that can receive or transmit a signal of the second frequency band, and a switch for switching between the first antenna and the second antenna to be used for performing communication.

In addition, transmission/reception unit 13, filter unit 14, and antenna unit 15 each are described as having, for example, a function of making a frequency used for wireless communication variable in the above embodiments, but transmission/reception unit 13, filter unit 14, and antenna unit 15 are not limited to the above. For example, at least any one of transmission/reception unit 13, filter unit 14, and antenna unit 15 may have the function of making a frequency used for wireless communication variable.

In addition, the first frequency band is described as, for example, a frequency band ranging from at least 426.25 MHz to at most 426.8375 MHz which is used for wireless stations in a low power security system, and the second frequency band is described as, for example, a 920 MHz band which is a general-purpose frequency band in the above embodiments, but so long as the first frequency band and the second frequency band are frequency bands different from each other, the first frequency band and the second frequency band are not limited to the above. Although the first frequency band and the second frequency band are frequency bands different from each other, the first frequency band and the second frequency band may, for example, overlap partially.

In addition, detected information communication device 10 is described as operating as, for example, a master station, in the above embodiments, but detected information communication device 10 may operate as a slave station, and slave station 20 may operate as a master station. That is to say, slave station 20 may have the same configuration as detected information communication device 10. In this case, a user may determine which of the wireless stations is to be operated as a master station.

In addition, the present invention can be realized not only as detected information communication device 10, but also as a wireless communication method including steps (processing) performed by each of structural elements included in detected information communication device 10.

Specifically, the wireless communication method is a wireless communication method of controlling operation of detected information communication device 10 that operates as a master station to slave station 20. The wireless communication method includes, as illustrated in FIG. 3, a step (step S11) of receiving, from slave station 20, detected information detected by the second detection unit included in slave station 20 via wireless communication using the first frequency band, and a step (step S12) of transmitting, to wireless station 30, at least one of the detected information detected by the second detection unit and detected information detected by first detection unit 18 included in detected information communication device 10 via wireless communication using the second frequency band different from the first frequency band.

The above steps may be performed by, for example, a computer (computer system). Furthermore, the present invention can be realized as a program for causing the computer to perform the steps included in the method. Moreover, the present invention can be realized as a non-transitory computer-readable recording medium, such as a CD-ROM, in which the program is recorded.

For example, when the present invention is realized by a program (software), each step is performed by executing the program using hardware resources, such as CPU of a computer, a memory, and an input-output circuit. That is to say, each step is performed by the CPU obtaining and calculating data from the memory or the input-output circuit, and outputting a result of the calculation to the memory or to the input-output circuit.

In addition, each structural element included in detected information communication device 10 according to the embodiments may be realized as a dedicated circuit or a general-purpose circuit.

Furthermore, each structural element included in detected information communication device 10 according to the embodiments may be realized as a large-scale integration (LSI) circuit which is an integrated circuit (IC).

In addition, an integrated circuit need not be limited to the LSI circuit. The integrated circuit may be realized by a dedicated circuit or a general-purpose processor. A field programmable gate array (FPGA) that can be programmed, or a reconfigurable processor that allows the reconfiguration of the connection and setting of a circuit cell inside the LSI circuit may be used.

Furthermore, when technology for integrating a circuit which replaces the LSI circuit is developed as a result of advancements of or derivatives from semiconductor technology, it is reasonable to use the technology to integrate each structural element included in detected information communication device 10 to realize an integrated circuit.

### REFERENCE MARKS IN THE DRAWINGS

- 1: communication system
- 2: detected information communication system
- 10: detected information communication device
- 11: wireless communication unit
- 12: frequency varying unit
- 14: filter unit
- 15: antenna unit
- 18: first detection unit
- 20: slave station
- 30: wireless station

## Claims

1. A communication system, comprising:
a communication device (10) and a slave station (20), wherein the communication device (10) that operates as a master station to the slave station (20),
wherein the communication device (10) comprises:
a wireless communication unit (11) configured to wirelessly communicate with the slave station (20) and another wireless station (30); and
a first detection unit (18) configured to detect information,
wherein the wireless communication unit (11) of the communication device (10) is further configured to:
receive, from the slave station (20), detected information detected by the slave station (20) via wireless communication using a first frequency band;
transmit beacon signals including a command to the slave station (20) at predetermined time intervals via wireless communication using the first frequency band, wherein the command included in the beacon signals either prohibits the slave station (20) from transmitting detected information detected by the slave station (20), when the detected information detected by the first detection unit (18) or the detected information received from the slave station (20) indicates an anomaly, or allows the slave station (20) to transmit the detected information to the communication device (10); and
transmit, to the other wireless station (30), at least one of detected information detected by the first detection unit (18) and the detected information received from the slave station (20) indicating the anomaly via wireless communication using a second frequency band different from the first frequency band, after transmitting a beacon signal including the command which prohibits the slave station (20) from transmitting the detected information detected by the second detection unit of the slave station (20);
wherein the slave station (20) is configured to:
receive at predetermined time intervals via wireless communication the beacon signals from the communication device (10);
detect the detected information using a second detection unit of the slave station (20); and
transmit the detected information detected by the second detection unit to the communication unit (10) via wireless communication using the first frequency band and a transmission timing of the beacon signal as a reference, when the command of the beacon signal allows the slave station (20) to transmit detected information detected by the second detection unit of the slave station (20);
wherein the slave station (20) is prohibited from transmitting the detected information detected by the second detection unit to the communication unit (10), when a received beacon signal includes a command which prohibits the slave station (20) from transmitting the detected information.

2. The communication system according to claim 1, wherein
the wireless communication unit (11) of the communication device (10) includes a frequency varying unit (12) configured to make a frequency band used for wireless communication the first frequency band or the second frequency band.

3. The communication system according to claim 2, wherein
the frequency varying unit (12) of the communication device (10) includes a filter unit (14) configured to make the frequency band used for wireless communication the first frequency band or the second frequency band.

4. The communication system (1) according to one of claims 1 to 3, further comprising:
the other wireless station (30).

5. A wireless communication method for controlling operation of a communication device (10) and the slave station (20), wherein the communication device (10) operates as a master station to a slave station (20), the wireless communication method comprising:
transmitting beacon signals including a command from the communication device (10) to the slave station (20) at predetermined time intervals via wireless communication using a first frequency band, wherein the command included in the beacon signals either prohibits the slave station (20) from transmitting detected information detected by the slave station (20), when the detected information detected by the first detection unit (18) or the detected information received from the slave station (20) indicates an anomaly, or allows the slave station (20) to transmit the detected information to the communication device (10); and;
receiving by the slave station (20) at predetermined time intervals via wireless communication the beacon signals from the communication device (10);
detecting by the slave station (20) the detected information using a second detection unit of the slave station (20);
transmitting by the slave station (20) the detected information detected by the second detection unit to the communication unit (10) via wireless communication using the first frequency band and a transmission timing of the beacon signal as a reference, when the command of the beacon signal allows the slave station (20) to transmit detected information detected by the second detection unit of the slave station (20);
receiving, at the communication device (10) from the slave station (20), the detected information detected by the slave station (20) via wireless communication using the first frequency band using a transmission timing of the beacon signal as a reference, when the command of a beacon signal allows the slave station (20) to transmit detected information detected by the second detection unit of the slave station (20); and
after transmitting the beacon signal including a command which prohibits the slave station (20) from transmitting the detected information detected by the second detection unit of the slave station (20), transmitting, to an other wireless station (30), at least one of the detected information detected by the second detection unit and detected information detected by a first detection unit (18) included in the communication device (10) via wireless communication using a second frequency band different from the first frequency band
wherein the slave station (20) is prohibited from transmitting the detected information detected by the second detection unit to the communication unit (10), when a received beacon signal includes a command which prohibits the slave station (20) from transmitting the detected information.

## Patentansprüche

1. Kommunikationssystem, umfassend:
eine Kommunikationsvorrichtung (10) und eine Slave-Station (20), wobei die Kommunikationsvorrichtung (10) als eine Master-Station zu der Slave-Station (20) arbeitet,
wobei die Kommunikationsvorrichtung (10) umfasst:
eine drahtlose Kommunikationseinheit (11), die konfiguriert ist, um drahtlos mit der Slave-Station (20) und einer anderen drahtlosen Station (30) zu kommunizieren; und
eine erste Erfassungseinheit (18), die konfiguriert ist, um Informationen zu erfassen,
wobei die drahtlose Kommunikationseinheit (11) der Kommunikationsvorrichtung (10) ferner konfiguriert ist, um:
von der Slave-Station (20) erfasste Informationen zu empfangen, die von der Slave-Station (20) über drahtlose Kommunikation unter Verwendung eines ersten Frequenzbands erfasst werden;
Bakensignale einschließlich eines Befehls an die Slave-Station (20) in vorbestimmten Zeitintervallen über drahtlose Kommunikation unter Verwendung des ersten Frequenzbands zu übertragen, wobei der in den Bakensignalen enthaltene Befehl entweder die Slave-Station (20) daran hindert, erfasste Informationen zu übertragen, die von der Slave-Station (20) erfasst werden, wenn die erfassten Informationen, die von der ersten Erfassungseinheit (18) erfasst werden, oder die erfassten Informationen, die von der Slave-Station (20) empfangen werden, eine Anomalie anzeigen, oder der Slave-Station (20) erlaubt, die erfassten Informationen an die Kommunikationsvorrichtung (10) zu übertragen; und
an die andere drahtlose Station (30) mindestens eine von erfassten Informationen, die von der ersten Erfassungseinheit (18) erfasst werden, und den erfassten Informationen, die von der Slave-Station (20) empfangen werden, die die Anomalie anzeigen, über drahtlose Kommunikation unter Verwendung eines zweiten Frequenzbands zu übertragen, das sich von dem ersten Frequenzband unterscheidet, nach dem Übertragen eines Bakensignals mit dem Befehl, der die Slave-Station (20) daran hindert, die erfassten Informationen zu übertragen, die von der zweiten Erfassungseinheit der Slave-Station (20) erfasst werden;
wobei die Slave-Station (20) konfiguriert ist, um:
in vorbestimmten Zeitintervallen über drahtlose Kommunikation die Bakensignale von der Kommunikationsvorrichtung (10) zu empfangen;
die erfassten Informationen unter Verwendung einer zweiten Erfassungseinheit der Slave-Station (20) zu erfassen; und
die erfassten Informationen, die von der zweiten Erfassungseinheit erfasst werden, über drahtlose Kommunikation unter Verwendung des ersten Frequenzbands und eines Übertragungszeitpunkts des Bakensignals als Referenz an die Kommunikationseinheit (10) zu übertragen, wenn der Befehl des Bakensignals der Slave-Station (20) erlaubt, erfasste Informationen zu übertragen, die von der zweiten Erfassungseinheit der Slave-Station (20) erfasst werden;
wobei die Slave-Station (20) daran gehindert wird, die erfassten Informationen, die von der zweiten Erfassungseinheit erfasst werden, an die Kommunikationseinheit (10) zu übertragen, wenn ein empfangenes Bakensignal einen Befehl enthält, der die Slave-Station (20) daran hindert, die erfassten Informationen zu übertragen.

2. Kommunikationssystem nach Anspruch 1, wobei
die drahtlose Kommunikationseinheit (11) der Kommunikationsvorrichtung (10) eine Frequenzänderungseinheit (12) enthält, die konfiguriert ist, um ein Frequenzband, das für drahtlose Kommunikation verwendet wird, zum ersten Frequenzband oder zum zweiten Frequenzband zu machen.

3. Kommunikationssystem nach Anspruch 2, wobei
die Frequenzänderungseinheit (12) der Kommunikationsvorrichtung (10) eine Filtereinheit (14) enthält, die konfiguriert ist, um das Frequenzband, das für drahtlose Kommunikation verwendet wird, zum ersten Frequenzband oder zum zweiten Frequenzband zu machen.

4. Kommunikationssystem (1) nach einem der Ansprüche 1 bis 3, ferner umfassend:
die andere drahtlose Station (30).

5. Drahtloses Kommunikationsverfahren zum Steuern des Betriebs einer Kommunikationsvorrichtung (10) und der Slave-Station (20), wobei die Kommunikationsvorrichtung (10) als eine Master-Station zu einer Slave-Station (20) arbeitet, wobei das drahtlose Kommunikationsverfahren umfasst:
Übertragen von Bakensignalen mit einem Befehl von der Kommunikationsvorrichtung (10) an die Slave-Station (20) in vorbestimmten Zeitintervallen über drahtlose Kommunikation unter Verwendung eines ersten Frequenzbands, wobei der Befehl, der in den Bakensignalen enthalten ist, entweder die Slave-Station (20) daran hindert, erfasste Informationen zu übertragen, die von der Slave-Station (20) erfasst werden, wenn die erfassten Informationen, die von der ersten Erfassungseinheit (18) erfasst werden, oder die erfassten Informationen, die von der Slave-Station (20) empfangen werden, eine Anomalie anzeigen, oder der Slave-Station (20) erlaubt, die erfassten Informationen an die Kommunikationsvorrichtung (10) zu übertragen; und;
Empfangen der Bakensignale von der Kommunikationsvorrichtung (10) durch die Slave-Station (20) in vorbestimmten Zeitintervallen über drahtlose Kommunikation;
Erfassen der erfassten Informationen durch die Slave-Station (20) unter Verwendung einer zweiten Erfassungseinheit der Slave-Station (20);
Übertragen der erfassten Informationen, die von der zweiten Erfassungseinheit erfasst werden, durch die Slave-Station (20) über drahtlose Kommunikation unter Verwendung des ersten Frequenzbands und eines Übertragungszeitpunkts des Bakensignals als Referenz an die Kommunikationseinheit (10), wenn der Befehl des Bakensignals der Slave-Station (20) erlaubt, erfasste Informationen zu übertragen, die von der zweiten Erfassungseinheit der Slave-Station (20) erfasst werden;
Empfangen der erfassten Informationen, die von der Slave-Station (20) erfasst werden, an der Kommunikationsvorrichtung (10) von der Slave-Station (20) über drahtlose Kommunikation unter Verwendung des ersten Frequenzbands unter Verwendung eines Übertragungszeitpunkts des Bakensignals als Referenz, wenn der Befehl eines Bakensignals der Slave-Station (20) erlaubt, erfasste Informationen zu übertragen, die von der zweiten Erfassungseinheit der Slave-Station (20) erfasst werden; und
nach dem Übertragen des Bakensignals, das einen Befehl enthält, der die Slave-Station (20) daran hindert, die erfassten Informationen zu übertragen, die von der zweiten Erfassungseinheit der Slave-Station (20) erfasst werden, Übertragen von mindestens einer der erfassten Informationen, die von der zweiten Erfassungseinheit erfasst werden, und erfassten Informationen, die von einer ersten Erfassungseinheit (18) erfasst werden, die in der Kommunikationsvorrichtung (10) enthalten ist, an eine andere drahtlose Station (30) über drahtlose Kommunikation unter Verwendung eines zweiten Frequenzbands, das sich vom ersten Frequenzband unterscheidet,
wobei die Slave-Station (20) daran gehindert wird, die erfassten Informationen, die von der zweiten Erfassungseinheit erfasst werden, an die Kommunikationseinheit (10) zu übertragen, wenn ein empfangenes Bakensignal einen Befehl enthält, der die Slave-Station (20) daran hindert, die erfassten Informationen zu übertragen.

## Revendications

1. Système de communication, comprenant :
un dispositif de communication (10) et une station esclave (20), dans lequel le dispositif de communication (10) fonctionne en qualité de station maîtresse pour la station esclave (20) ;
dans lequel le dispositif de communication (10) comprend :
une unité de communication sans fil (11) configurée de manière à communiquer par voie hertzienne avec la station esclave (20) et une autre station sans fil (30) ; et
une première unité de détection (18) configurée de manière à détecter des informations ;
dans lequel l'unité de communication sans fil (11) du dispositif de communication (10) est en outre configurée de manière à :
recevoir, en provenance de la station esclave (20), des informations détectées qui sont détectées par la station esclave (20) par l'intermédiaire d'une communication sans fil utilisant une première bande de fréquence ;
transmettre des signaux de balise incluant une instruction à la station esclave (20), à des intervalles de temps prédéterminés, par l'intermédiaire d'une communication sans fil utilisant la première bande de fréquence, dans laquelle l'instruction incluse dans les signaux de balise soit interdit à la station esclave (20) de transmettre les informations détectées qui sont détectées par la station esclave (20), lorsque les informations détectées qui sont détectées par la première unité de détection (18) ou les informations détectées qui sont reçues de la station esclave (20) indiquent une anomalie, soit permet à la station esclave (20) de transmettre les informations détectées au dispositif de communication (10) ; et
transmettre, à l'autre station sans fil (30), au moins l'une parmi les informations détectées qui sont détectées par la première unité de détection (18) et les informations détectées qui sont reçues en provenance de la station esclave (20), indiquant l'anomalie par l'intermédiaire d'une communication sans fil utilisant une seconde bande de fréquence différente de la première bande de fréquence, après avoir transmis un signal de balise incluant l'instruction qui interdit à la station esclave (20) de transmettre les informations détectées qui sont détectées par la seconde unité de détection de la station esclave (20) ;
dans laquelle la station esclave (20) est configurée de manière à :
recevoir, à des intervalles de temps prédéterminés, par l'intermédiaire d'une communication sans fil, les signaux de balise en provenance du dispositif de communication (10) ;
détecter les informations détectées en utilisant une seconde unité de détection de la station esclave (20) ; et
transmettre les informations détectées qui sont détectées par la seconde unité de détection, au dispositif de communication (10), par l'intermédiaire d'une communication sans fil utilisant la première bande de fréquence, et une temporisation de transmission du signal de balise, en tant qu'une référence, lorsque l'instruction du signal de balise permet à la station esclave (20) de transmettre les informations détectées qui sont détectées par la seconde unité de détection de la station esclave (20) ;
dans laquelle la station esclave (20) est interdite de transmettre les informations détectées qui sont détectées par la seconde unité de détection, au dispositif de communication (10), lorsqu'un signal de balise reçu incluent une instruction qui interdit à la station esclave (20) de transmettre les informations détectées.

2. Système de communication selon la revendication 1, dans lequel :
l'unité de communication sans fil (11) du dispositif de communication (10) inclut une unité de variation de fréquence (12) configurée de manière à faire d'une bande de fréquence, utilisée pour la communication sans fil, la première bande de fréquence ou la seconde bande de fréquence.

3. Système de communication selon la revendication 2, dans lequel :
l'unité de variation de fréquence (12) du dispositif de communication (10) inclut une unité de filtrage (14) configurée de manière à faire de la bande de fréquence, utilisée pour la communication sans fil, la première bande de fréquence ou la seconde bande de fréquence.

4. Système de communication (1) selon l'une quelconque des revendications 1 à 3, comprenant en outre :
l'autre station sans fil (30).

5. Procédé de communication sans fil destiné à commander le fonctionnement d'un dispositif de communication (10) et de la station esclave (20), dans lequel le dispositif de communication (10) fonctionne en qualité de station maîtresse, pour une station esclave (20), le procédé de communication sans fil comprenant les étapes ci-dessous consistant à :
transmettre des signaux de balise incluant une instruction en provenance du dispositif de communication (10), à la station esclave (20), à des intervalles de temps prédéterminés, par l'intermédiaire d'une communication sans fil utilisant une première bande de fréquence, dans laquelle l'instruction incluse dans les signaux de balise soit interdit à la station esclave (20) de transmettre les informations détectées qui sont détectées par la station esclave (20), lorsque les informations détectées qui sont détectées par la première unité de détection (18) ou les informations détectées qui sont reçues en provenance de la station esclave (20) indiquent une anomalie, soit permet à la station esclave (20) de transmettre les informations détectées au dispositif de communication (10) ; et
recevoir, par le biais de la station esclave (20), à des intervalles de temps prédéterminés, par l'intermédiaire d'une communication sans fil, les signaux de balise en provenance du dispositif de communication (10) ;
détecter, par le biais de la station esclave (20), les informations détectées en utilisant une seconde unité de détection de la station esclave (20) ; et
transmettre, par le biais de la station esclave (20), les informations détectées qui sont détectées par la seconde unité de détection, au dispositif de communication (10), par l'intermédiaire d'une communication sans fil utilisant la première bande de fréquence, et une temporisation de transmission du signal de balise, en tant qu'une référence, lorsque l'instruction du signal de balise permet à la station esclave (20) de transmettre les informations détectées qui sont détectées par la seconde unité de détection de la station esclave (20) ;
recevoir, au niveau du dispositif de communication (10), en provenance de la station esclave (20), les informations détectées qui sont détectées par la station esclave (20), par l'intermédiaire d'une communication sans fil utilisant la première bande de fréquence, en utilisant une temporisation de transmission du signal de balise en tant que référence, lorsque l'instruction d'un signal de balise permet à la station esclave (20) de transmettre des informations détectées qui sont détectées par la seconde unité de détection de la station esclave (20) ; et
après l'étape de transmission du signal de balise incluant une instruction qui interdit à la station esclave (20) de transmettre les informations détectées qui sont détectées par la seconde unité de détection de la station esclave (20), transmettre, à une autre station sans fil (30), au moins l'une parmi les informations détectées qui sont détectées par la seconde unité de détection et les informations détectées qui sont détectées par une première unité de détection (18) incluse dans le dispositif de communication (10), par l'intermédiaire d'une communication sans fil utilisant une seconde bande de fréquence différente de la première bande de fréquence ;
dans laquelle la station esclave (20) est interdite de transmettre les informations détectées qui sont détectées par la seconde unité de détection, au dispositif de communication (10), lorsqu'un signal de balise reçu inclut une instruction qui interdit à la station esclave (20) de transmettre les informations détectées.
